# EUROPÄISCHE PATENTANMELDUNG

(11) **EP 0 679 041 A2**
(43) Veröffentlichungstag der Anmeldung: **25.10.1995**
(21) Anmeldenummer: 95105210.9
(22) Anmeldetag: 06.04.1995
(51) Int. Cl.: H04Q 7/22, H04Q 7/32

(54) **Notrufsystem für Mobilfunksystem**

(30) Priorität: 21.04.1994 DE 4413972
(71) Anmelder: SIEMENS AKTIENGESELLSCHAFT, D-80333 München (DE)
(72) Erfinder: Weigel, Walter, Dr., Dipl.-Ing., D-81541 München (DE)

(57) **Zusammenfassung**

Bei einem Notrufsystem wird nach dem Betätigen einer Notruftaste (N) an einer Mobilstation (MS) selbsttätig über ein an sich bekanntes Mobilfunksystem eine Verbindung zu einer Zentralstelle hergestellt. In einem Speicher (S) der Mobilstation (MS) gespeicherter Text wird nach dem Herstellen der Verbindung zur Zentralstelle übertragen. Der Text wird dabei in Form von Sprache zur Zentralstelle übertragen. Die Zentralstelle ermittelt selbsttätig die Position der Mobilstation (MS) entweder durch Ortung mittels der Basisstationen des Mobilfunksystems oder mittels von der Mobilstation (MS) empfangener Positionsdaten, wenn letztere mit einer eigenen Ortungseinheit (OE) versehen ist.

## Beschreibung

Die Erfindung bezieht sich auf ein Notrufsystem gemäß dem Oberbegriff des Patentanspruchs 1. Insbesondere bezieht sich die Erfindung auf ein Notrufsystem für die Verwendung in einem Mobilfunksystem mit zellularem Aufbau.

Die DE 33 15 017 A1 offenbart ein Notrufsystem, bei dem ein drahtgebundener Telefonapparat verwendet wird. An dem Telefonapparat muß jeweils nach einer vorgegebenen Zeitdauer, z.B. nach jeweils zwölf Stunden, eine Taste betätigt werden. Falls die Taste nicht betätigt wird, wird selbsttätig ein Notruf zu einer Zentralstelle hergestellt. Von dem Telefonapparat kann mittels synthetischer Sprache ein verständlicher Text zur Zentralstelle übertragen werden.

Aus der DE 28 37 575 B1 ist ebenfalls ein Notrufsystem bekannt, bei dem eine Zentralstelle mittels eines drahtgebundenen Telefonapparats selbsttätig gewählt wird. Anschließend werden zur Zentralstelle Daten der hilfesuchenden Stelle übermittelt. Ein ähnliches Notrufsystem ist aus der DE 41 21 589 A1 bekannt. Bei diesem Notrufsystem werden zur Zentralstelle anstelle der Daten Sprachsignale übertragen, die zuvor mittels des Mikrophons des Telefonapparats in einen Sprachspeicher eingegeben wurden.

Die genannten Notrufsysteme sind für drahtgebundene Telefonapparate vorgesehen und sind daher nur im unmittelbaren Bereich des Telefonanschlusses zu verwenden.

Aus der DE 34 46 786 A1 ist ein Notrufsystem bekannt, bei dem nach dem Betätigen einer Taste an einem von einem Benutzer getragenen kleinen mobilen Sende/Empfangsgerät eine Verbindung zu einer Zentralstation hergestellt wird. Eine Person in der Zentralstation kann dann die Position des Sende/Empfangsgeräts entweder durch Sprachkontakt mit dem Benutzer oder durch eine Ortung mittels der von verschiedenen Sende/Empfangsstationen empfangenen Empfangssignale ermitteln. Dieses Notrufsystem erfordert eine eigene Infrastruktur an Sende/Empfangsstationen und einer Zentralstation, sowie speziell für diesen Zweck vorgesehene Sende/Empfangsgeräte.

Die DE 38 39 959 C2 offenbart ein Notrufsystem, bei dem ein in einem Kraftfahrzeug eingebautes Mobilfunktelefon im Notfall selbsttätig eine zuvor eingespeicherte Nummer einer Zentralstelle wählt und dann Daten zu dieser Zentralstelle überträgt. Die Daten umfassen fahrzeugspezifische Daten, sowie Positionsdaten, die mittels fester Basisstationen und eines im Fahrzeug vorgesehenen Ortungsgeräts ermittelt werden. Dieses Notrufsystem erfordert somit zusätzlich zu dem Mobilfunktelefon noch ein Ortungsgerät. Außerdem ist es nicht in der Lage, gespeicherte Sprachinformation zu übertragen.

Ein Verfahren zum Ortung von Mobilfunkstationen ist in der EP 0 005 692 beschrieben. Bei diesem bekannten System wird die Position der Mobilstation mittels der Übertragung einer Funkbereichsnummer der zugehörigen Basisstation bestimmt. Die Positionsbestimmung ist hierbei jedoch relativ ungenau, da sie auf die Zellengröße begrenzt ist.

In der EP 0 290 725 B1 wird ein weiteres Verfahren zur Bestimmung der ungefähren Position einer Mobilstation in einem zellularen Mobilfunksystem mit Mobilstationen und mit jeweils einer Basisstation in jeder Funkzelle beschrieben. Die jeweilige Nummer der Basisstation wird unter Verwendung von mittels Datentelegrammen den im Funkbereich der Basisstation aktiven Mobilstationen mitgeteilt und dient als Ortsinformation, welche von der Mobilstation wiederum in einem Datentelegramm an die Basisstation zurückgesendet wird. Hierbei wird in den von der Basisstation an die Mobilstation ausgesendeten Datentelegrammen auch der Wert der bei der Basisstation empfangenen Feldstärke der Mobilstation übertragen. Diese Größe wird in der Mobilstation ausgewertet und als zusätzliche Standortinformation im von der Mobilstation an die Basisstation gesendeten Datentelegramm mitgesendet. Bei diesem bekannten Verfahren wird nur eine Bestimmung des Abstands der Mobilstation in Relation zu einer definierten Basisstation vorgenommen, so daß eine genaue Positionsbestimmung der Mobilstation nicht möglich ist.

Ein Verfahren zur relativen Entfernungsmessung von Mobilstationen in Mobilfunknetzen mittels vergleichender Laufzeiten ist in der EP 0 141 994 B2 sowie in einer Veröffentlichung in Funktechnik 41, Heft 4, S.146 (1986) beschrieben. Die Auswertung dient zur Detektion der Grenzen der Funkzonen. Den Mobilstationen werden dabei die Basisstationen derart zugeordnet, daß die verfügbaren Funkfrequenzen effizient genutzt sowie die Sendeleistungen gering gehalten werden, um Störungen anderer Mobilstationen im Funkverkehr zu verhindern. Bei diesem bekannten Verfahren wird zur Ermittlung der Grenze zweier benachbarter Funkzonen als Kriterium für die Umschaltung bewegter Teilnehmer in eine andere Funkzone eine relative Entfernungsmessung unter Verwendung des Differenz-Entfernungsverfahrens nach dem Phasenvergleichsprinzip durchgeführt. Dabei wird der Abstand des beweglichen Teilnehmers zu zwei oder mehreren Basisstationen durch Auswertung der Phasendifferenz, der mit gleicher Bezugsphase ausgesendeten Signale der Basisstationen, mit den in den Basisstationen festgelegten und über Funk signalisierten Bewertungsmaßnahmen für die Zellgrenzen verglichen. Die Ermittlung der Grenze im Zustand der Betriebsbereitschaft der Mobilstationen im Organisationskanal wird entweder durch den Teilnehmer selbst oder für in Verbindung befindliche Mobilstationen in den Sprechkanälen unter Verwendung eines Meßempfängers in den Basisstationen durchgeführt. Weiterhin können zur relativen Entfernungsmessung auch die Übertragungsqualität und/oder die Signalstärken ausgewertet werden, mit denen die Mobilstationen bei den Basisstationen empfangen werden.

Die oben genannten Verfahren beziehen sich auf ein unter der Bezeichnung C-Netz bekanntes analoges Mobilfunksystem mit synchronisierten Basisstationen. Charakteristisch für dieses System ist, daß unmittelbar benachbarte Funkzonen eine Funkzonengruppe bilden, in der sich die insgesamt zur Verfügung stehenden Frequenzenkanäle wiederholen. Kennzeichnend ist ebenfalls der zeitgeteilte Organisationskanal, auf dem alle umgebenden Funkzonen auf einer einzigen Frequenz und völlig gleichwertig senden. Die relative Entfernungsmessung erfolgt dabei über den Abstand des bewegten Teilnehmers zu zwei oder mehreren Basisstationen durch Auswertung der Phasendifferenz (Feldstärke, etc..) der mit gleicher Bezugsphase auf dem Organisationskanal ausgesendeten Signale der Basisstationen. Voraussetzung für die Richtigkeit der Phasenauswertung ist dabei die phasengleiche Aussendung aller zu bewertenden Signale.

Für die Ortung von Mobilstationen in den sich zunehmend durchsetzenden digitalen Mobilfunksystemen sind diese Verfahren aufgrund abweichender Signalisierungsverfahren nicht geeignet. Ein derartiges Mobilfunksystem ist beispielsweise das vom European Telecommunication Standards Institute (ETSI) standardisierte GSM (Global System for Mobile Communication). Ein ähnliches System ist das DCS 1800/PCN. Bei diesen Systemen senden bzw. empfangen die Basisstationen benachbarter Zellen üblicherweise auf unterschiedlichen Frequenzbändern und zudem sind die Basisstationen gegenwärtig untereinander nicht synchronisiert, d.h. sie senden ihre Signale nicht phasengleich aus.

Eine Möglichkeit zur exakten Lokalisierung bietet gegenwärtig die Satellitenortung mittels des bekannten Global Positioning System (GPS). Dazu kann eine GPS-Einheit an die Mobilstation angeschlossen werden. Die GPS-Einheit ermittelt dann auf Anfrage ihren momentanen Abstand zu verschiedenen Ortungssatelliten und berechnet daraus ihren Aufenthaltsort. Die an die Mobilstation weitergeleiteten Daten können dann über Funk an einen anderen Teilnehmer oder an eine Zentrale übertragen werden.

Aus der Patentanmeldung P 44 09 178.8 ist ein weiteres Verfahren zum Ermitteln der Position von Mobilstationen in einem Mobilfunksystem mit einer Mehrzahl von Funkzellen bekannt, bei dem die Ermittlung der Position der Mobilstation durch Messen der Entfernung zwischen der Mobilstation und Basisstationen erfolgt, wobei in die Messung mindestens eine Ortskoordinate einer Basisstation eingeht.

Der Erfindung liegt die Aufgabe zugrunde, ein Notrufsystem anzugeben, das auf einfache Weise einerseits eine Sprachübertragung eines Notrufs zu einer Zentralstelle und andererseits eine genaue Ortung der hilfesuchenden Stelle ermöglicht.

Erfindungsgemäß wird die Aufgabe bei dem Notrufsystem der eingangs genannten Art durch die im kennzeichnenden Teil des Patentanspruchs 1 angegebenen Merkmale gelöst. Zweckmäßige Ausgestaltungen der Erfindung sind in den Unteransprüchen angegeben.

Die Erfindung kann in allen zellularen Mobilfunksystemen zur Ortung von mit Mobilstationen versehenen Teilnehmern angewandt werden, insbesondere in GSM-Netzen und in DCS1800-Netzen. In diesen letztgenannten Netzen ist das erfindungsgemäße Verfahren besonders einfach zu realisieren.

Das Notrufsystem gemäß der Erfindung hat den Vorteil, daß in der Mobilstation keine wesentlichen Zusatzeinheiten, sondern nur eine Notruftaste und ein Sprachspeicher notwendig sind. Somit können Mobilstationen mit nur geringfügigem Mehraufwand auf Wunsch über einen Zusatzdienst "Notruf" im Mobilfunksystem verfügen.

Es ist auch möglich, die Mobilstation als ein spezielles kleines Gerät auszubilden, das bei Bedarf durch Drücken von nur einer Taste selbsttätig einen Notruf absetzt. Da für die Übertragung des Notrufs das bekannte Mobilfunksystem benutzt wird, ist kein spezieller Notrufkanal erforderlich, sondern es kann die übliche Notrufnummer, z.B. 112 verwendet werden. Da der Notruftext in Form von Sprache übertragen wird, können in der Notrufannahme die üblichen Prozeduren ablaufen. Zusätzlich können noch Daten übertragen werden, um auch eine automatische Bearbeitung des Notrufs zu ermöglichen.

Die Mobilstation wird durch einen Speicher ergänzt, der die entsprechenden Informationen enthält. Die Sprachinformation kann digital gespeichert werden. Zweckmäßigerweise wird die Sprache komprimiert gespeichert und vor der Ausgabe expandiert. Es ist auch möglich, die Sprache zu synthetisieren.

Die Mobilstation enthält eine Notruftaste, die vorzugsweise als spezielle, große, deutlich sichtbare Taste ausgebildet ist. Nach der Betätigung der Taste wählt die Mobilstation automatisch die Zentralstelle und überträgt die Sprachinformation zur Zentralstelle. Die Position der Mobilstation wird dann automatisch von der Zentralstelle oder der Mobilstation ermittelt. Falls die hilfesuchende Person in der Lage ist zu sprechen, kann auch eine Sprachkommunikation mit der Zentralstelle erfolgen und die genaue Position verbal mitgeteilt werden.

Ein Ausführungsbeispiel der Erfindung wird im folgenden anhand von Zeichnungen näher erläutert. Es zeigen:
- Fig. 1: ein für das erfindungsgemäße Notrufsystem vorgesehenes Endgerät , und
- Fig. 2: eine Blockbild eines für das erfindungsgemäße Notrufsystem vorgesehenen Endgeräts.

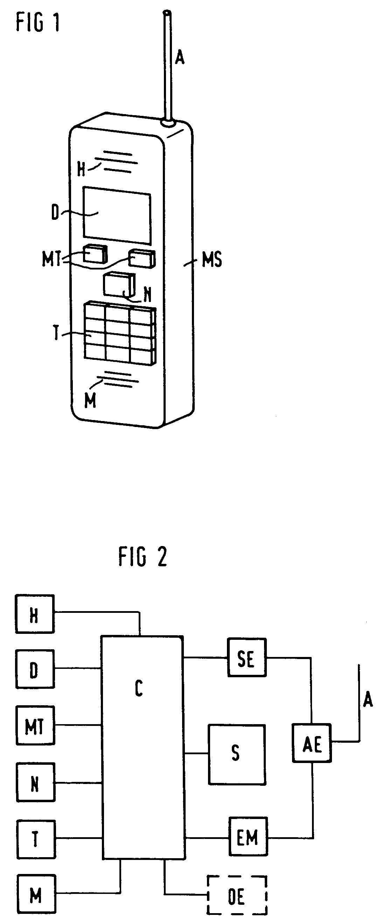

Bei dem in Fig. 1 dargestellten Endgerät, das im folgenden als Mobilstation MS bezeichnet wird und das bei dem hier beschriebenen Ausführungsbeispiel als übliches Mobilfunktelefon ausgebildet ist, ist neben den bekannten Einheiten, wie einer Antenne A, einer Tastatur T, mindestens einer Menütaste MT, einer Hörkapsel H, einem Mikrophon M und einer Anzeigeeinheit D eine Notruftaste N vorgesehen. Diese Notruftaste N kann durch eine leicht zerstörbare Abdeckung oder eine andere Sicherungsmaßnahme gegen ein unbeabsichtigtes Betätigen gesichert sein. Beim Betätigen dieser Notruftaste N wählt die Mobilstation MS selbsttätig die Nummer einer Notrufe entgegennehmenden Zentralstelle. Hierzu wird der für ein Mobilfunksystem, beispielsweise das GSM, übliche Verbindungsaufbau benutzt. Anschließend wird ein in einem Speicher gespeicherter Text verbal zur Zentralstelle übertragen. Der Text wurde zuvor in den Speicher eingespeichert, wobei die Einspeicherung beispielsweise mittels des Mikrophons M erfolgen kann oder durch Eingabe von alphabetischen Zeichen mittels der Tastatur T erfolgen kann. Zweckmäßigerweise wird die Sprache komprimiert digital gespeichert und mittels eines Vocoders ausgegeben. Im letzteren Fall wird sie synthetisiert und ausgegeben.

Nach der Sprachausgabe erfolgt eine Ortung der Mobilstation MS. Diese Ortung wird beispielsweise über das Mobilfunksystem durchgeführt, wie es in der Patentanmeldung P 44 09 178.8 beschrieben ist.

Es ist auch möglich, die Ortung in der Mobilstation MS selbst vorzunehmen. Dies kann unter Verwendung der Basisstationen des Mobilfunksystems oder des bekannten GPS (Global Positioning System) erfolgen. Die Positionsdaten werden dann der Zentralstelle ebenfalls über das Mobilfunksystem mitgeteilt.

Bei der Verwendung der Basisstationen für die Ortung in der Mobilstation MS sind in der Mobilstation MS die Daten aller Basisstationen (Position, Kennung) für eine Region gespeichert. Mittels einer Antenne an der Mobilstation MS, die eine Peilung der zu empfangenden Basisstationen ermöglicht, wird dann mittels der Winkel zwischen drei Basisstationen die Position ermittelt. Sie kann dann durch Daten oder durch synthetische Sprache zur Zentralstelle übertragen werden. Falls die Mobilstation MS nur zwei Basisstationen empfangen kann, benutzt sie zusätzlich die Entfernungsmessung über die Laufzeiten des Signals zwischen der Mobilstation MS und den Basisstationen.

Bei dem in Fig. 2 dargestellten Blockbild der Mobilstation MS ist eine Steuereinheit C vorgesehen, an der die verschiedenen Einheiten der Mobilstation MS angeschlossen sind. Neben der Tastatur T, der Hörkapsel H, dem Mikrophon M und der Anzeigeeinheit D ist die Notruftaste N an der Steuereinheit C angeschlossen. Zusätzlich ist ein Speicher S vorgesehen in dem der Notruftext gespeichert ist, der beim Betätigen der Notruftaste N ausgelesen und zur Zentralstelle gesendet wird. In üblicher Weise ist die Steuereinheit C mit einem Sender SE und einem Empfänger EM verbunden, die ihrerseits über eine Ausgangseinheit AE mit der Antenne A verbunden sind.

Für die Eingabe des Notruftextes wird die Menütaste MT entsprechend betätigt und der Notruftext wird mittels des Mikrophons M in den Speicher S eingegeben. Dabei wird die Sprache in der Steuereinheit C digitalisiert und komprimiert. Beim Betätigen der Notruftaste N wird dieser Text dann wieder expandiert und übertragen. Es auch möglich, den Notruftext mittels der Tastatur T einzugeben und im Speicher S digital zu speichern. Bei der Ausgabe wird der Text dann in der Steuereinheit C in synthetische Sprache umgesetzt und ausgesendet.

Falls die Ortung in der Mobilstation MS erfolgt, ist eine Ortungseinheit OE vorgesehen, die die Position der Mobilstation MS ermittelt und die beispielsweise entsprechend einer bekannten Ortungseinheit für das GPS (Global Positioning System) ausgebildet ist. Nach dem Betätigen der Notruftaste N ermittelt dann die Ortungseinheit OE die Position der Mobilstation MS und gibt die Positionsdaten an den Speicher S ab. Bei der Übertragung des Notruftextes werden dann die Positionsdaten durch synthetische Sprache ausgegeben und zur Zentralstelle übertragen. Anstelle der verbalen Übertragung der Positionsdaten oder zusätzlich zu dieser können die Daten auch in Form von binär codierten Zeichen zur Zentralstelle übertragen werden.

## Patentansprüche

1. Notrufsystem, bei dem nach dem Betätigen einer Notruftaste (N) an einem Endgerät (MS) selbsttätig eine Verbindung zu einer Zentralstelle hergestellt wird und bei dem ein in einem Speicher (S) des Endgeräts (MS) gespeicherter Text nach dem Herstellen der Verbindung zur Zentralstelle übertragen wird,
**dadurch gekennzeichnet,**
daß das Endgerät (MS) die Verbindung zur Zentralstelle über ein an sich bekanntes Mobilfunksystem herstellt, daß der im Speicher (S) gespeicherte Text in Form von Sprache zur Zentralstelle übertragen wird und daß die Zentralstelle die Position des Endgeräts (MS) ermittelt.

2. Notrufsystem nach Anspruch 1,
**dadurch gekennzeichnet,**
daß als Mobilfunksystem ein nach dem GSM (Global System for Mobile Communication) - Standard arbeitendes System vorgesehen ist.

3. Notrufsystem nach Anspruch 1 oder Anspruch 2,
**dadurch gekennzeichnet,**
daß die Ermittlung der Position des Endgeräts (MS) unter Verwendung von Feststationen des Mobilfunksystems erfolgt.

4. Notrufsystem nach Anspruch 1 oder Anspruch 2,
**dadurch gekennzeichnet,**
daß die Ermittlung der Position des Endgeräts (MS) unter Verwendung von vom Endgerät (MS) mittels einer Ortungseinheit (OE) ermittelten Positionsdaten in der Zentralstelle erfolgt.

5. Notrufsystem nach Anspruch 4,
**dadurch gekennzeichnet,**
daß die Positionsdaten an die Zentralstelle in Form von Sprachsignalen übertragen werden.

6. Notrufsystem nach Anspruch 4,
**dadurch gekennzeichnet,**
daß die Positionsdaten an die Zentralstelle in Form von binärcodierten Daten übertragen werden.

7. Notrufsystem nach einem der vorangehenden Ansprüche,
**dadurch gekennzeichnet,**
daß der Text im Speicher (S) komprimiert gespeichert ist und vor der Übertragung expandiert wird.

8. Notrufsystem nach einem der vorangehenden Ansprüche,
**dadurch gekennzeichnet,**
daß der Text im Speicher (S) binär codiert gespeichert ist und vor der Übertragung in synthetische Sprache umgesetzt wird.

9. Notrufsystem nach einem der vorangehenden Ansprüche,
**dadurch gekennzeichnet,**
daß das Endgerät (MS) als an sich bekanntes Mobilfunktelefon ausgebildet ist und mit einer Notruftaste (N) versehen ist.

10. Notrufsystem nach einem der Ansprüche 1 bis 8,
**dadurch gekennzeichnet,**
daß das Endgerät (MS) als kleines, mobiles Notrufgerät ausgebildet ist, das mit einer Notruftaste (N) versehen ist.

11. Endgerät für ein Notrufsystem, bei dem nach dem Betätigen einer Notruftaste (N) selbsttätig eine Verbindung zu einer Zentralstelle hergestellt wird und bei dem ein in einem Speicher (S) gespeicherter Text nach dem Herstellen der Verbindung zur Zentralstelle übertragen wird,
**dadurch gekennzeichnet,**
daß das Endgerät als eine Mobilstation (MS) ausgebildet ist, die die Verbindung zur Zentralstelle über ein an sich bekanntes Mobilfunksystem herstellt, daß der zur Zentralstelle zu übertragende Text im Speicher (S) in Form von Sprache über das Mobilfunksystem zur Zentralstelle übertragen wird und daß die Zentralstelle die Position der Mobilstation (MS) ermittelt.

12. Endgerät nach Anspruch 11,
**dadurch gekennzeichnet,**
daß es eine Einrichtung (OE) zum Ermitteln seiner Position aufweist, die die Positionsdaten an die Zentralstelle überträgt.

13. Endgerät nach Anspruch 12,
**dadurch gekennzeichnet,**
daß die Einrichtung als eine an sich bekannte Ortungseinheit (OE) ausgebildet ist.

14. Endgerät nach Anspruch 11 oder Anspruch 12,
**dadurch gekennzeichnet,**
daß die Einrichtung (OE) die Positionsdaten an die Zentralstelle in Form von Sprachsignalen überträgt.

15. Endgerät nach Anspruch 11 oder Anspruch 12,
**dadurch gekennzeichnet,**
daß die Einrichtung (OE) die Positionsdaten an die Zentralstelle in Form von binärcodierten Daten überträgt.

16. Endgerät nach einem der Ansprüche 11 bis 15,
**dadurch gekennzeichnet,**
daß der Text im Speicher (S) in Form von Sprache komprimiert gespeichert ist und vor der Übertragung expandiert wird.

17. Endgerät nach einem der Ansprüche 11 bis 15,
**dadurch gekennzeichnet,**
daß der Text im Speicher (S) binär codiert gespeichert ist und vor der Übertragung in synthetische Sprache umgesetzt wird.

18. Endgerät nach einem der Ansprüche 11 bis 17,
**dadurch gekennzeichnet,**
daß es als an sich bekanntes Mobilfunktelefon ausgebildet ist und mit einer Notruftaste (N) versehen ist.

19. Endgerät nach einem der Ansprüche 11 bis 17,
**dadurch gekennzeichnet,**
daß es als kleines, mobiles Notrufgerät ausgebildet ist, das mit einer Notruftaste (N) versehen ist.
